# EUROPEAN PATENT APPLICATION

(11) **EP 4 817 730 A1**
(43) Date of publication of application: **07.10.2026**
(21) Application number: 25775772.4
(22) Date of filing: 14.03.2025
(51) Int. Cl.: B01J 8/02, B01J 8/06

(54) **EXTRACTION DEVICE AND EXTRACTION METHOD**

(30) Priority: 29.03.2024 JP 2024055559
(71) Applicant: Nippon Shokubai Co., Ltd., Osaka-shi, Osaka 541-0043 (JP)
(72) Inventor: MAEHARA, Takeshi, Himeji-shi, Hyogo 671-1282 (JP); NISHIGUCHI, Toshiya, Himeji-shi, Hyogo 671-1282 (JP)
(74) Representative: Haseltine Lake Kempner LLP
(86) International application number: PCT/JP2025/009809
(87) International publication number: WO 2025/205046

(57) **Abstract**

Problem

To provide an unloading device and an unloading method that are capable of unloading catalyst or other solid, which is difficult to unload, from the interior of a tube body even when a relatively large striking force is applied to the catalyst or other solid.

Solution

An unloading device 10 includes a gas supply pipe 20 including a nozzle 21 and a tube 22, a gripping portion 30 capable of gripping and releasing the tube 22, and an inching drive portion 102 configured to insert the nozzle 21 into a tube body 510 by moving the gripping portion 30 gripping the tube 22 forward in a direction toward the tube body. The unloading device 10 further includes a fixed guide portion 50 located closer to the tube body than the gripping portion 30 and covering the tube 22, and a movable guide portion 60 extending from the gripping portion 30 toward the fixed guide portion 50 and configured to move toward the fixed guide portion 50 together with the forward movement of the gripping portion 30, while holding the tube 22.

## Description

### Technical Field

The present invention relates to an unloading device used to unload solid loaded in a tube body such as a reaction tube of a multi-tubular reactor, and an unloading method for unloading solid loaded in a tube body.

### Background Art

In the petrochemical industry, many catalytic reactions using a multi-tubular reactor (hereinafter also simply referred to as "reactor") have been carried out. The reactor is provided with several thousands to several tens of thousands of reaction tubes (hereinafter also referred to as "tube bodies"), and each reaction tube is loaded with solid such as catalyst, carrier, or inert substance such as metal ring (hereinafter also referred to as "catalyst or other solid") suitable for each catalytic reaction.

When the loaded material is used for a long period, catalytic functions are impaired by poisoning, coking, sintering, or the like, and stable and efficient catalytic reactions can no longer occur. Thus, the catalyst or other solid, with which stable and efficient catalytic reactions can no longer occur, is unloaded from a tube body to be replaced with new high-performance catalyst or other solid. The catalyst or other solid is unloaded from a tube body also when the reactor, the tube body, or the like is repaired or inspected.

As a method for unloading the catalyst or other solid from a tube body in a reactor, for example, a method using an opening portion formed at the lower end of the tube body is known. In this method, an operator enters the reactor, inserts a rod-shaped member or the like through the opening portion formed at the lower end of the tube body, pushes up loaded material such as catalyst, and loosens the catalyst or other solid inside the tube body and let them fall.

In the above-described method, each time the operator pushes up the loaded material with the rod-shaped member, the catalyst or other solid loaded in the tube body, and their crushed pieces fall and shower down on the operator. Furthermore, the worksite is a harsh environment where a large amount of powder dust is generated, and it is thus unavoidable for the operator to wear dust-proof clothing, a powder dust mask, goggles, gloves, and the like. Accordingly, the unloading operation using the above-described method is not regarded as a preferable method from the perspective of efficiency and hygiene.

In consideration of the above problems, a particulate unloading device is known that unloads catalyst or other solid by supplying gas into a tube body loaded with the catalyst or other solid (see Patent Document 1). In order to make it possible to unload agglomerated particulates, the particulate unloading device is provided with a crushing fitting attached to the tip end of a tube for supplying gas. The agglomerated particulates are crushed by being collided with the crushing fitting upon vertical movement of the tube. Particulates that are not agglomerated, and the crushed particulates are sucked up together with a flow of gas discharged from the tube, and are unloaded to the exterior of the tube body.

The technology disclosed in Patent Document 1 can improve work efficiency as compared with the method in which an operator manually unloads loaded material through the opening portion formed at the lower end of the tube body. Moreover, the loaded material sucked up toward the upper end of the tube body can be directly delivered into a collection container or a pump truck. Thus, the loaded material does not shower down on the operator, and hygiene can also be improved.

### Citation List

### Patent Document

Patent Document 1: JP 2001-353437 A

### Summary of Invention

### Technical Problem

As in the technology disclosed in Patent Document 1, in order to crush agglomerated particulates, it is necessary for the crushing fitting to apply a relatively large striking force to the upper surface of the agglomerated particulates. When a relatively large striking force is repeatedly applied to the agglomerated particulates, the tube may bend, break, and become damaged. A bent tube can no longer smoothly move up and down, and a broken tube cannot apply the striking force in the first place. As a result, the particulates cannot be unloaded from the interior of the tube body.

Even when the striking force is repeatedly applied to limited positions on the upper surface of the agglomerated particulates, the particulates receiving the striking force are merely crushed, and the resulting fine crushed particulates enter gaps between the surrounding particulates, causing the agglomerated particulates to more rigidly adhere to each other. As a result, the particulates cannot be unloaded from the interior of the tube body. Patent Document 1 proposes a mechanism configured to rotate the crushing fitting about the tube (see FIG. 5 of Patent Document 1, for example). However, the position at which a pointed end of the crushing fitting collides is limited to a circle centered on the tube. Thus, the agglomerated particulates still cannot be efficiently crushed.

Furthermore, when supply of compressed air stops while the particulates are unloaded, the particulates suctioned toward the opening portion fall, and in that process, clogging (bridging) of the particulates may occur between the particulates and the inner wall of the tube body. However, the method in Patent Document 1 requires compressed air to continue flowing so that bridging does not occur, and there is no description regarding any means of breaking the bridging that has occurred. If the bridging that has occurred cannot be broken, the particulates cannot be unloaded from the interior of the tube body.

The technology disclosed in Patent Document 1 is a technology for crushing and unloading particulates, and targets particulates, such as agglomerated catalysts or absorbent, for unloading. On the other hand, metal ring such as Raschig ring may be loaded in a reaction tube. However, since the metal ring cannot be crushed even when a striking force is applied, the metal ring is deformed by striking, and is more difficult to be unloaded.

In addition, when agglomerated particulates are present, unloading may not be possible even when the striking is continued without changing the striking position. Furthermore, even when the agglomerated particulates have become unloadable by striking, these particulates may be unloaded as a mass, and bridging may occur in that process.

Thus, an object of the present invention is to provide an unloading device capable of efficiently unloading catalyst or other solid from the interior of a tube body of a multi-tubular reactor by effectively applying a relatively large striking force to the catalyst or other solid loaded in the tube body.

Another object is to provide an unloading method for unloading catalyst or other solid from the interior of the tube body even when adhered catalyst or other solid, or deformed metal ring (hereinafter also referred to as difficult-to-unload substance) is present, or bridging of the catalyst or other solid is present.

### Solution to Problem

An aspect of the present invention is an unloading device configured to unload catalyst or other solid or inert substance by supplying gas into a tube body loaded with the catalyst or other solid. The unloading device includes: a gas supply pipe including a nozzle capable of discharging gas inside the tube body, and a tube that supplies the gas to the nozzle, the tube having flexibility; a gripping portion capable of gripping and releasing the tube; and an inching drive portion configured to insert the nozzle into the tube body by moving the gripping portion gripping the tube forward in a direction toward the tube body. The unloading device further includes a fixed guide portion located closer to the tube body than the gripping portion and covering the tube, and a movable guide portion extending from the gripping portion toward the fixed guide portion, and configured to move toward the fixed guide portion together with the forward movement of the gripping portion, while holding the tube.

Another aspect of the present invention is an unloading device configured to unload catalyst or other solid by supplying gas into a tube body loaded with the catalyst or other solid. The unloading device includes: a gas supply pipe including a nozzle capable of discharging gas inside the tube body, and a tube that supplies the gas to the nozzle, the tube having flexibility; a gripping portion capable of gripping and releasing the tube; and an inching drive portion configured to insert the nozzle into the tube body by moving the gripping portion gripping the tube forward in a direction toward the tube body. The unloading device further includes a rotation drive portion configured to cause the nozzle to perform forward and reverse swiveling motions by causing the gripping portion gripping the tube to perform forward and reverse rotational motions in a circumferential direction of the tube. The inching drive portion includes an insertion mechanism configured to insert the nozzle into the tube body by causing the nozzle to perform an inching motion that repeats the forward movement and a backward movement in which the gripping portion gripping the tube returns to a direction away from the tube body.

Another aspect of the present invention is an unloading method for unloading catalyst or other solid by supplying gas into a tube body loaded with the catalyst or other solid. The unloading method includes: supplying gas through a gas supply pipe including a nozzle and a tube; and moving the tube forward toward the tube body by an inching motion, while protecting the tube with a fixed guide portion and a movable guide portion. The catalyst or other solid are loosened by causing the nozzle to strike the catalyst or other solid. Then, the catalyst or other solid is unloaded by suctioning the catalyst or other solid together with a flow of the gas, while discharging the gas from the nozzle.

### Advantageous Effects of Invention

According to an aspect of the present invention, in a case where difficult-to-unload substance, such as adhered catalyst or other solid or deformed metal ring, is unloaded, damaging (bending) of the tube such as bending or breaking can be prevented even when a high load is applied to the tube. Accordingly, even when a relatively large striking force is applied to the difficult-to-unload substance, smooth vertical movement of the tube can be ensured. As a result, the catalyst or other solid including the difficult-to-unload substance can be unloaded from the interior of the tube body.

According to another aspect of the present invention, since the tube is caused to perform forward and reverse swiveling motions, the nozzle connected to the tube also performs forward and reverse swiveling motions in the tube body, thereby evenly striking the catalyst or other solid. Accordingly, even when a relatively large striking force is applied to the difficult-to-unload substance, application of the striking force only to limited positions is prevented, and the difficult-to-unload substance can be efficiently crushed or loosened. As a result, the catalyst or other solid including the difficult-to-unload substance can be unloaded from the interior of the tube body. Even when bridging has occurred, the bridging can be broken since the tube and the nozzle that have entered the interior of the tube body perform forward and reverse swiveling motions. Accordingly, even when bridging occurs, the catalyst or other solid and the difficult-to-unload substance can be efficiently unloaded without stopping operation of the unloading device.

According to another aspect of the present invention, in a case where difficult-to-unload substance, such as adhered catalyst or other solid or deformed metal ring, is unloaded, damaging (bending) of the tube such as bending or breaking can be prevented even when a high load is applied to the tube. Accordingly, even when a relatively large striking force is applied to the difficult-to-unload substance, smooth vertical movement of the tube can be ensured. As a result, the catalyst or other solid including the difficult-to-unload substance can be unloaded from the interior of the tube body.

### Brief Description of Drawings

FIG. 1 is a diagram schematically illustrating an unloading device.
FIG. 2 is a diagram schematically illustrating a reactor according to an embodiment.
FIG. 3 is a cross-sectional view illustrating the interior of a tube body according to the embodiment.
FIG. 4A is a diagram illustrating a gas supply pipe.
FIG. 4B is a diagram illustrating a nozzle.
FIG. 5 is a diagram for description of a flow of gas discharged from the nozzle.
FIG. 6 is a diagram illustrating a testing machine for measuring the strength of a tube against bending.
FIG. 7 is a perspective view illustrating an inching drive portion and a rotation drive portion.
FIG. 8 is a front view illustrating the inching drive portion and the rotation drive portion.
FIG. 9(A) is a perspective view illustrating a state in which the tube is gripped, and FIG. 9(B) is a perspective view illustrating a state in which the tube is released.
FIGS. 10(A) to 10(D) are diagrams for description of an operation of feeding the tube and an operation of changing the gripping position of the tube within a movable range of a slider.
FIG. 11(A) is a graph schematically illustrating a change in the insertion length of the nozzle to be inserted into the tube body, and FIG. 11(B) is a schematic diagram illustrating a state in which clogging (bridging) of catalyst or other solid has occurred while the catalyst or other solid is unloaded.
FIG. 12 is a diagram schematically illustrating a drive system of a movable chuck.
FIGS. 13A(A) and 13A(B) are diagrams illustrating relevant parts of the inching drive portion and a suction unit.
FIGS. 13B(A) to 13B(D) are diagrams for description of an operation of a movable guide portion having a telescopic structure.
FIGS. 14(A) and 14(B) are cross-sectional views illustrating a fixed guide portion and the movable guide portion.
FIGS. 15(A) and 15(B) are diagrams for description of a defect where the tube bends.
FIGS. 16(A) and 16(B) are diagrams for description of rotational motion of a gripping portion.
FIG. 17 is a diagram for description of forward and reverse swiveling motions of the nozzle.

### Description of Embodiments

Hereinafter, embodiments of the present invention will be described in detail with reference to the accompanying drawings. The embodiments described herein are examples for embodying the technical concept of the present invention, and do not limit the present invention. Therefore, other practical forms, examples, operational techniques, and the like that can be conceived by those skilled in the art without departing from the gist of the present invention are all included in the scope and gist of the present invention, and are included in the invention described in the claims and the scope of equivalents thereof.

In addition, the drawings attached to the present specification may, for convenience of illustration and ease of understanding, be schematically expressed with scales, vertical and horizontal dimensional ratios, shapes, and the like being changed as appropriate from actual ones. The drawings are merely examples and do not limit interpretation of the present invention.

Note that, in the present specification, ordinal numbers such as "first" and "second" may be attached. However, unless otherwise specifically described regarding these ordinal numbers, the ordinal numbers are provided for convenience of explanation to identify components and do not specify number or order.

### Embodiment

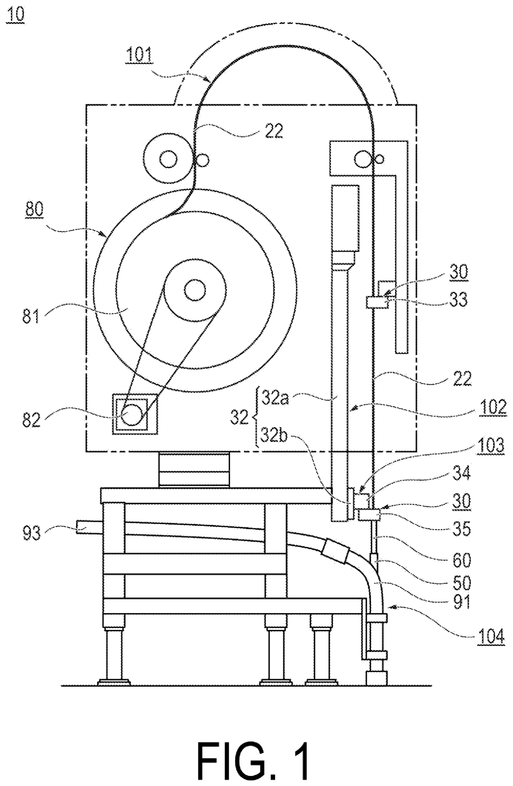

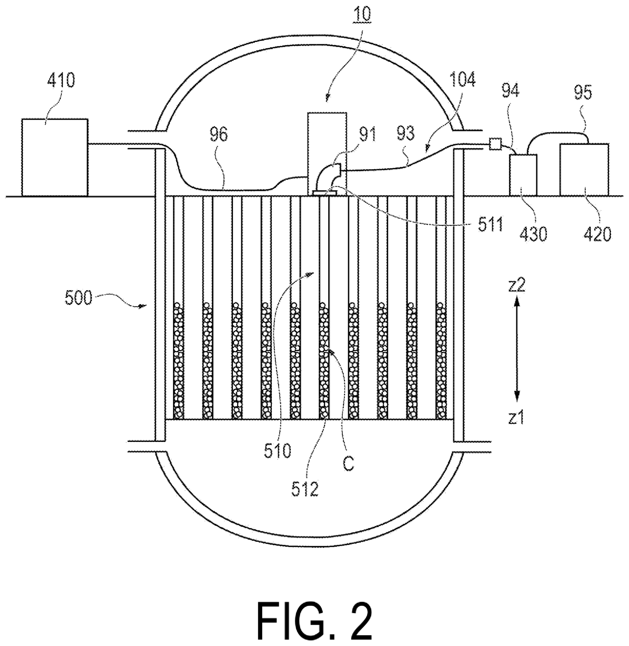

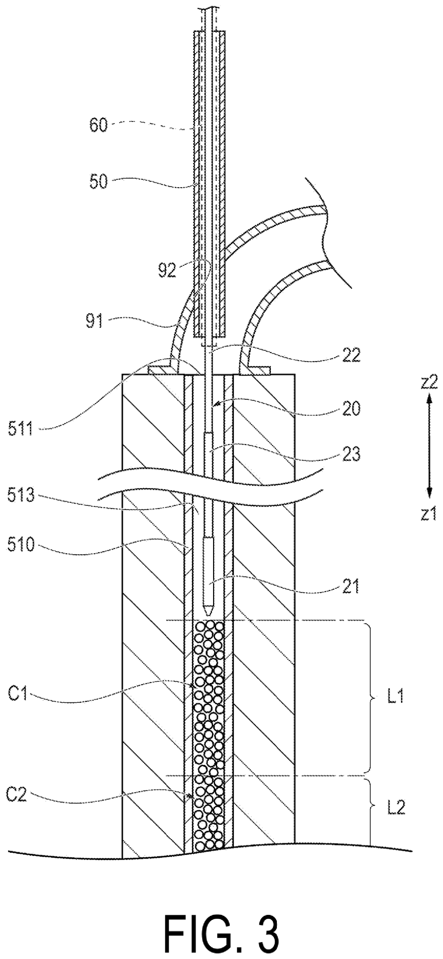

FIG. 1 is a diagram schematically illustrating an unloading device 10. FIG. 2 is a diagram schematically illustrating a reactor 500 according to an embodiment. FIG. 3 is a cross-sectional view illustrating the interior of a tube body 510 according to the embodiment.

As illustrated in FIGS. 2 and 3, the unloading device 10 according to the present embodiment can be used for, for example, unloading catalyst or other solid C loaded in an interior 513 of the tube body 510 of the reactor 500 installed at a chemical plant to the exterior of the tube body 510. The unloading device 10 unloads the catalyst or other solid C by supplying gas into the tube body 510 loaded with the catalyst or other solid C.

The catalyst or other solid C is catalyst, carrier (for example, ceramic such as silica, alumina, or zirconia), metal ring (for example, Raschig ring), or the like. The catalyst or other solid C may have various shapes such as a spherical shape, a granular shape, a powder shape, a ring shape (annular shape), and a columnar shape, and are not limited to a particular shape.

A catalyst or a carrier becomes powdered when used for a long period, and the powder generated by the powderization may fuse together due to heat. In addition, the catalyst, the carrier, or a metal ring may be adhered to each other due to heat through the generated powder, may be adhered to each other due to carbides generated by a reaction, or may adhere to an inner wall surface. Furthermore, the metal ring may be deformed by receiving a large striking force or being adhered to each other due to carbides generated by a reaction. Each catalyst or other solid C can be unloaded assuming that each catalyst or other solid C maintains its initial uniform shape and is not adhered to another. However, unloading from the tube body 510 becomes difficult when the shape changes to a non-uniform shape or the catalyst or other solid C adheres to another. In order to unload the catalyst or other solid C whose shape has changed to such a non-uniform shape, it is effective, rather than crushing the catalyst or other solid, to loosen the catalyst or other solid to bring the catalyst or other solid back to nearly the original shape, or to move the deformed catalyst or other solid C caught between particles.

The tube body 510 is a reaction tube loaded with the catalyst or other solid C. An upper end opening portion 511 connected to the exterior of the tube body 510 is formed at the upper end of the tube body 510 in the height direction (direction of arrows z1-z2 illustrated in FIGS. 2 and 3). A lower end opening portion 512 communicating with the exterior of the tube body 510 is formed at the lower end of the tube body 510 in the height direction. Depending on an intended catalytic reaction, the tube body 510 can be formed to have, for example, an inner diameter of 10 mm to 60 mm and a height of 1000 mm to 30000 mm. Note that the tube body 510 does not necessarily need to be disposed in the vertical direction, and may be disposed in, for example, an oblique direction or the horizontal direction.

The same kind of catalyst or other solid C may be loaded in the interior 513 of the tube body 510. For example, a plurality of layers L1 and L2 made of different kinds of catalyst or other solid C1 and C2 may be loaded at different positions of the tube body 510 in the height direction (see FIG. 3). The first layer L1 may be made of the catalyst or other solid C1, and the second layer L2 may be made of the catalyst or other solid C2.

The catalyst or other solid C1 may be, for example, a spherical catalyst for a catalytic reaction, which is formed to have an outer diameter of 1 mm to 15 mm. The catalyst or other solid C2 may be, for example, a catalyst for catalytic reaction, which has a shape or composition different from that of the catalyst or other solid C1, or a metal Raschig ring formed into a ring shape (annular shape). Although not illustrated, in the interior 513 of the tube body 510, another layer may be formed on the lower end side relative to the second layer L2 using granular catalyst or other solid that is of the same kind as, or a different kind from, the catalyst or other solid C1 or the catalyst or other solid C2.

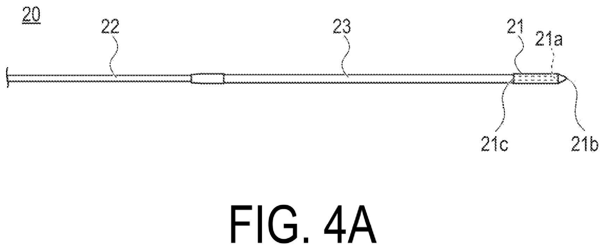

FIGS. 4A to 17 are diagrams for description of elements constituting the unloading device 10. The unloading device 10 according to the embodiment broadly includes a gas supply unit 101, an inching drive portion 102, a rotation drive portion 103, and a suction unit 104. Hereinafter, the elements constituting the unloading device 10 will be described.

### Gas Supply Unit 101

The gas supply unit 101 includes a tube housing portion 80, a gas supply pipe 20, and a gas supply machine 410. The gas supply pipe 20 includes a nozzle 21 capable of discharging gas inside the tube body 510, and a tube 22 that supplies the gas to the nozzle 21 and has flexibility.

### Tube Housing Portion 80

As illustrated in FIG. 1, the tube housing portion 80 includes a reel 81 around which the tube 22 of the gas supply pipe 20 is wound, and a motor 82 that rotationally drives the reel 81. The reel 81 and the motor 82 constitute a withdrawal portion that withdraws the gas supply pipe 20 from the interior of the tube body 510.

### Gas Supply Pipe 20

FIG. 4A is a diagram illustrating the gas supply pipe 20. As illustrated in FIG. 4A, the gas supply pipe 20 includes the nozzle 21 capable of discharging gas in the interior 513 of the tube body 510, and the tube 22 that supplies the gas to the nozzle 21 and has flexibility. The gas is, for example, compressed air. In description of the present specification, a tip end side of the gas supply pipe 20 and each component constituting the gas supply pipe 20 means a tip end side in an insertion direction into the tube body 510 (the right side in FIG. 4A and the lower side in FIGS. 2 and 3), and a base end side means a side opposite to the insertion direction (the left side in FIG. 4A and the upper side in FIGS. 2 and 3).

In the gas supply pipe 20 of the present embodiment, the base end side of the nozzle 21 and the tip end side of the tube 22 are connected to each other through a pipe 23. The base end side of the tube 22 is connected through a hose 96 to the gas supply machine 410 that supplies compressed air (see FIG. 2). The gas supply machine 410 is constituted by, for example, a well-known compressor or a pipe that supplies compressed air and is laid in a factory in which the multi-tubular reactor 500 is installed.

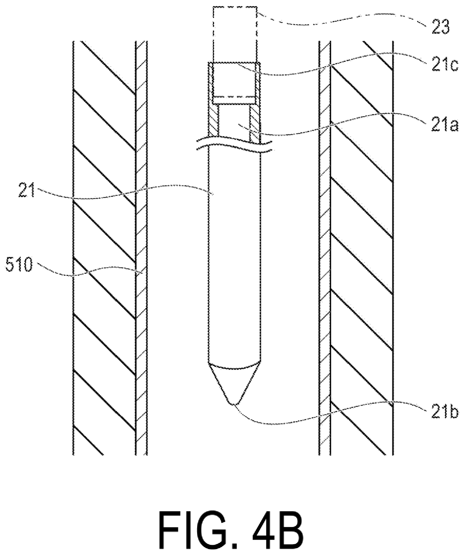

FIG. 4B is a diagram illustrating the nozzle 21. As illustrated in FIG. 4B, the nozzle 21 includes a flow path 21a through which gas flows, a tip end opening portion 21b formed on the tip end side of the flow path 21a, and a base end opening portion 21c formed on the base end side of the flow path 21a. One or more tip end opening portions 21b are formed toward the flow path 21a. In the present embodiment, the nozzle 21 has a tapered shape with the outer diameter decreasing toward the tip end side, but may have any shape as long as gas can be supplied from the tip end opening portion 21b, and a striking force can be applied to the catalyst or other solid C.

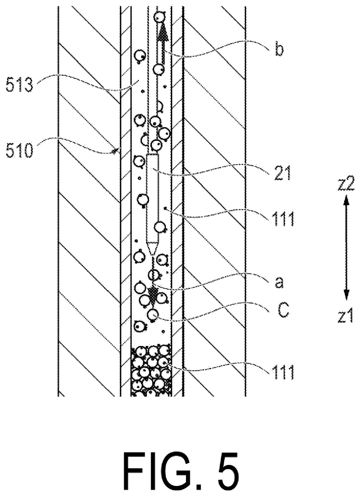

FIG. 5 is a diagram for description of a flow of gas discharged from the nozzle 21. In FIG. 5, small black dots denoted by reference sign 111 schematically represent impurities such as carbides. The impurities 111 cause the catalyst or other solid C to adhere to each other, or cause the catalyst or other solid C to adhere to an inner wall of the tube body 510. As illustrated in FIG. 5, a gas flow "a" discharged from the tip end opening portion 21b of the nozzle 21 mainly loosens the catalyst or other solid C loaded in the interior 513 of the tube body 510. The gas discharged from the tip end opening portion 21b generates a gas flow "b" toward the upper end opening portion 511. The gas flow "b" serves to push up (move) the loosened catalyst or other solid C toward the upper end opening portion 511 of the tube body 510. As a result, the catalyst or other solid C can be efficiently unloaded to the exterior of the tube body 510. As the distance between the tip end opening portion 21b and the upper end of the catalyst or other solid C loaded in the interior 513 of the tube body 510 becomes shorter, upper-end catalyst or other solid C of the loaded catalyst or other solid C is more significantly affected by the gas flow "a", and more easily loosened, and is more easily pushed up toward the upper end opening portion 511 of the tube body 510 by the gas flow "b".

The nozzle 21 may be made of, for example, a metallic material such as SUS or aluminum. However, a material other than a metallic material may be used. The material may be made of a hard resin such as acrylic resin.

The nozzle 21 may be formed to have an outer diameter that satisfies the following Expression 1 relative to the outer diameter of the catalyst or other solid C to be unloaded and the inner diameter of the tube body 510. The length of the nozzle 21 may be 1 cm or more and 10 cm or less.

Expression 1 is as follows:
the outer diameter [mm] of the catalyst or other solid C ≤ (the inner diameter [mm] of the tube body 510 - the outer diameter [mm] of the nozzle 21)/2.

The pipe 23 may be, for example, a rigid metal pipe. The pipe 23 serves to increase the weight of the gas supply pipe 20 as a whole. Thus, the combined weight of the pipe 23 and the nozzle 21 may be 20 to 600 times the weight of one particle of catalyst or other solid to be unloaded. Similarly to the nozzle 21, the pipe 23 may be formed to have an outer diameter that satisfies Expression 1 (by reading the outer diameter of the nozzle 21 as the outer diameter of the pipe 23), and the outer diameter of the pipe 23 may be equal to or smaller than the outer diameter of the nozzle 21 (see Expression 2 described below), so that the catalyst or other solid C during the unloading process is not caught by a connection portion between the pipe 23 and the nozzle 21.

Expression 2 is as follows:
the outer diameter of the pipe 23 ≤ the outer diameter of the nozzle 21.

The length of the pipe 23 is preferably 4 to 10 times that of the nozzle 21. In addition, the combined length of the nozzle 21 and the pipe 23 is preferably 1 cm or more and 50 cm or less so that a striking force can be efficiently transmitted to the catalyst or other solid C. Moreover, the base end side of the nozzle 21 and the tip end side of the tube 22 may be directly connected without using the pipe 23.

The tube 22 may be made of a well-known piping member having flexibility and having a pressure resistance with which gas such as compressed air can be fed. The tube 22 may also be made of a material capable of transmitting, to the catalyst or other solid C, a pressing force toward the tip end side of the nozzle 21, and is suitably made of, for example, rubber, resin, or metal. Among these, resin is preferable from the perspective of flexibility and strength against bending, and particularly nylon, polyurethane, and polyolefin are preferable.

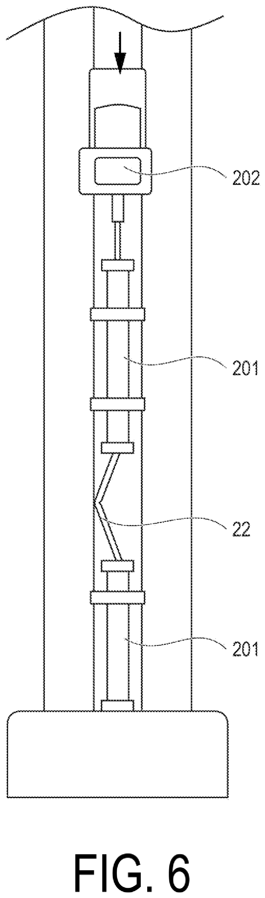

FIG. 6 is a diagram illustrating a testing machine that measures the strength of the tube 22 against bending. The strength of the tube 22 against bending can be examined by a selection test for piping member to measure a force that causes the tube 22 to buckle when compressed from both ends of the tube 22 in its axial direction. For example, the tube 22 having a length of 30 cm as illustrated in FIG. 6 is passed through two fixation guides 201, each of which has a length of 10 cm, and opposite ends of the fixation guides 201 are fixed. The lower end of the tube 22 is fixed in a state in which a portion of the tube 22 between the two fixation guides 201 is exposed by 10 cm. The upper end of the tube 22 is fixed through an adapter to a measurement shaft of a load measuring device 202 such as a digital force gauge manufactured by NIDEC, and a force is applied toward the lower end of the tube 22. At this time, the exposed portion of the tube 22 bends and buckles as the force increases. A material having a force of 10 N or more at which the buckling occurs is preferable as a piping member, and can be used for the tube 22 as a material capable of transmitting a pressing force toward the tip end side of the nozzle 21 to the catalyst or other solid C.

Similarly to the nozzle 21, the tube 22 may be formed to have an outer diameter that satisfies Expression 1 (by reading the outer diameter of the nozzle 21 as the outer diameter of the tube 22) and to have a length that is 1.1 to 10 times the length from the upper end opening portion 511 of the tube body 510 to a planned unloading position so that the catalyst or other solid C loaded in the tube body 510 can be unloaded.

### Inching Drive Portion 102

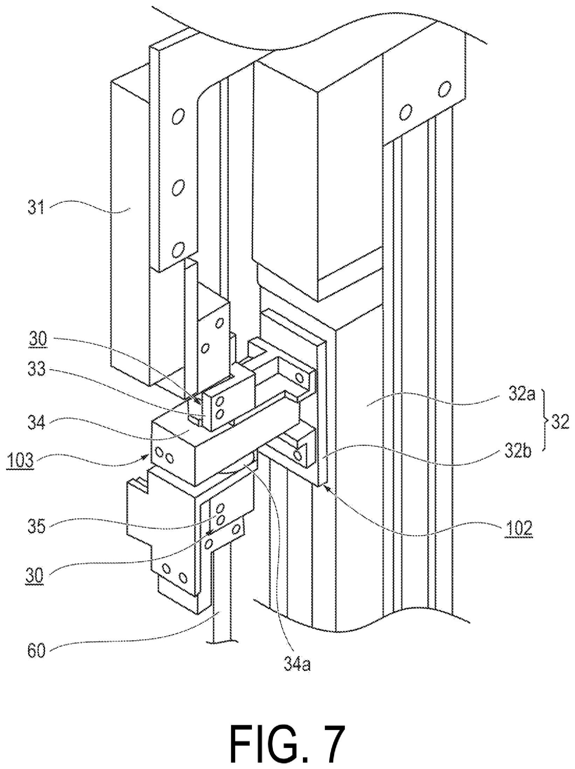

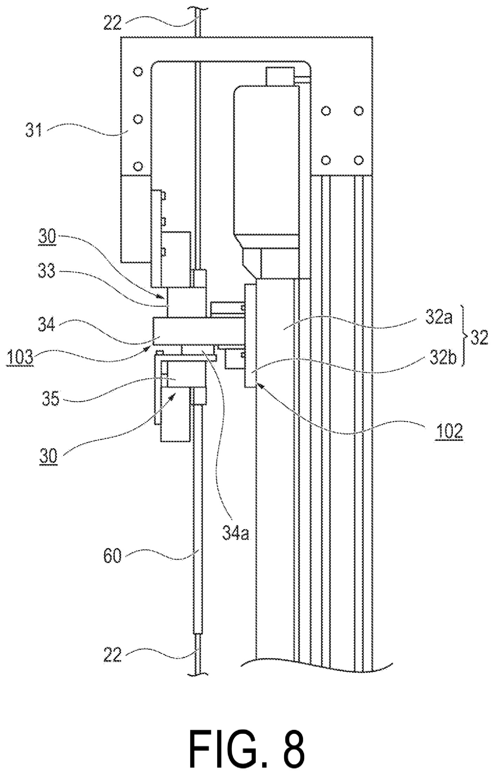

FIGS. 7 and 8 are a perspective view and a front view respectively, illustrating the inching drive portion 102 and the rotation drive portion 103. The inching drive portion 102 includes a gripping portion 30, a vertical frame 31, a linear actuator 32, and a movable guide portion 60. The inching drive portion 102 inserts the nozzle 21 into the tube body 510 by moving the gripping portion 30 gripping the tube 22 forward in a direction toward the tube body 510. The inching drive portion 102 includes an insertion mechanism configured to insert the nozzle 21 into the tube body 510 by causing the nozzle 21 to perform an inching motion that repeats the forward movement and a backward movement in which the gripping portion 30 gripping the tube 22 returns to a direction away from the tube body 510.

### Gripping Portion 30, Vertical Frame 31, and Linear Actuator 32

As illustrated in FIGS. 7 and 8, the linear actuator 32 includes a slide rail 32a disposed in the up-down direction, and a slider 32b slidably disposed on the slide rail 32a. A fixed chuck 33 is fixed to the vertical frame 31. A rotary actuator 34 is fixed on the slider 32b of the linear actuator 32. A movable chuck 35 is attached to a rotating portion 34a of the rotary actuator 34. The movable chuck 35 moves together with movement of the slider 32b. The fixed chuck 33 and the movable chuck 35 constitute the gripping portion 30 capable of gripping and releasing the tube 22 of the gas supply pipe 20.

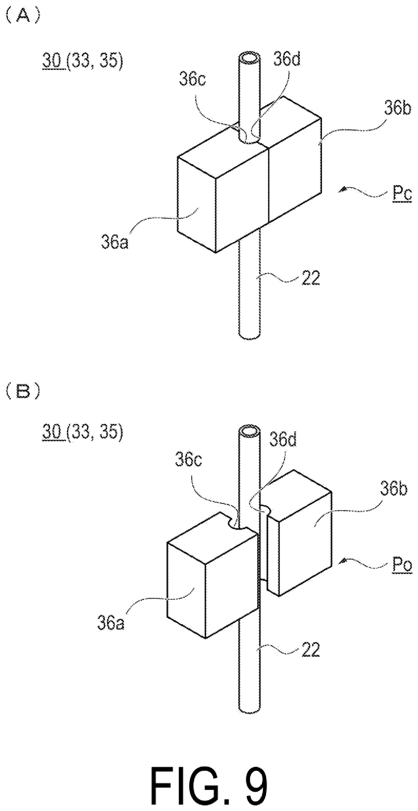

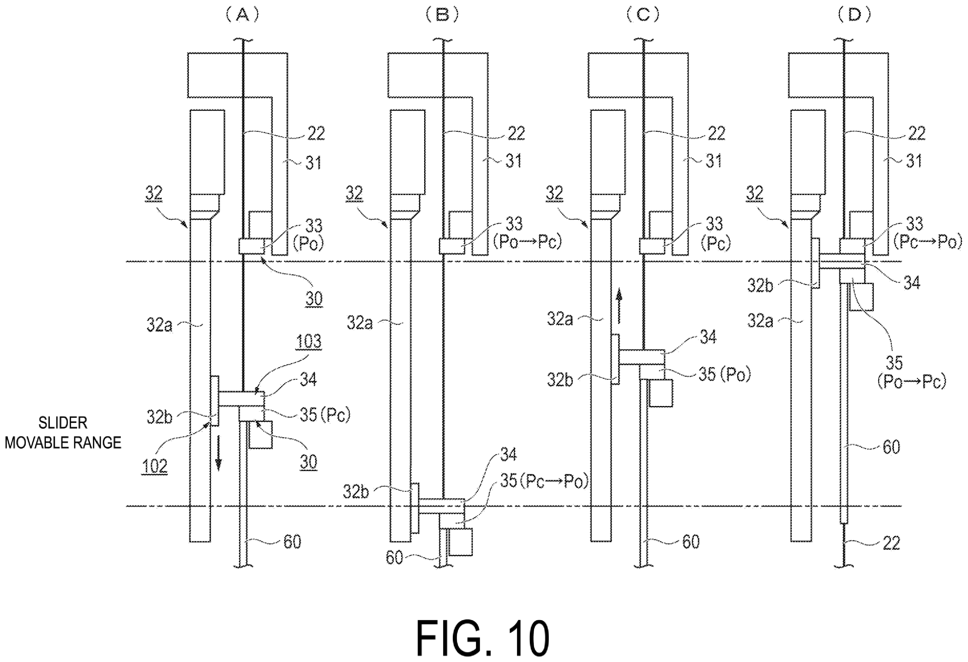

FIG. 9(A) is a perspective view illustrating a state in which the tube 22 is gripped. FIG. 9(B) is a perspective view illustrating a state in which the tube 22 is released. FIGS. 10(A) to 10(D) are diagrams for description of an operation of feeding the tube 22 and an operation of changing the gripping position of the tube 22 within a movable range of the slider 32b.

The fixed chuck 33 and the movable chuck 35 are both capable of gripping and releasing the tube 22. The operation of feeding the tube 22 and the operation of changing the gripping position of the tube 22 within the movable range of the slider 32b will be described below.

As illustrated in FIGS. 9(A) and 9(B), each of the fixed chuck 33 and the movable chuck 35 includes a pair of blocks 36a and 36b (a first block 36a and a second block 36b), and recessed grooves 36c and 36d for receiving the tube 22 are formed in gripping surfaces of the blocks 36a and 36b, respectively. When the pair of blocks 36a and 36b is closed (the closed state is denoted by Pc), the tube 22 is gripped (FIG. 9(A)). When the pair of blocks 36a and 36b is opened (the opened state is denoted by Po), the tube 22 is released (FIG. 9(B)).

FIG. 10(A) illustrates a state in which the slider 32b moves downward in the diagram toward the lower limit position of the movable range. By the movement of the slider 32b, the movable chuck 35 gripping the tube 22 moves forward in the direction toward the tube body 510 (downward in the diagram). The movable chuck 35 grips the tube 22, and the fixed chuck 33 releases the tube 22. The slider 32b slightly reciprocates while moving and generates vibration.

FIG. 10(B) illustrates a state in which the slider 32b has reached the lower limit position of the movable range. When the slider 32b reaches the lower limit position of the movable range, the fixed chuck 33 grips the tube 22 and the movable chuck 35 releases the tube 22.

FIG. 10(C) illustrates a state in which the slider 32b moves upward in the diagram toward the upper limit position of the movable range while the fixed chuck 33 continues gripping the tube 22. By the movement of the slider 32b, the movable chuck 35 moves backward in the direction away from the tube body 510 (upward in the diagram).

FIG. 10(D) illustrates a state in which the slider 32b has reached the upper limit position of the movable range. When the slider 32b reaches the upper limit position of the movable range, the movable chuck 35 grips the tube 22 and the fixed chuck 33 releases the tube 22.

Through this series of operations, the movable chuck 35 can feed the tube 22 and thereafter can change the gripping position of the tube 22.

When the slider 32b moves forward in the direction toward the tube body 510 (downward in the diagram), the movable chuck 35 gripping the tube 22 moves forward in the direction toward the tube body 510. Accordingly, the nozzle 21 is inserted into the tube body 510.

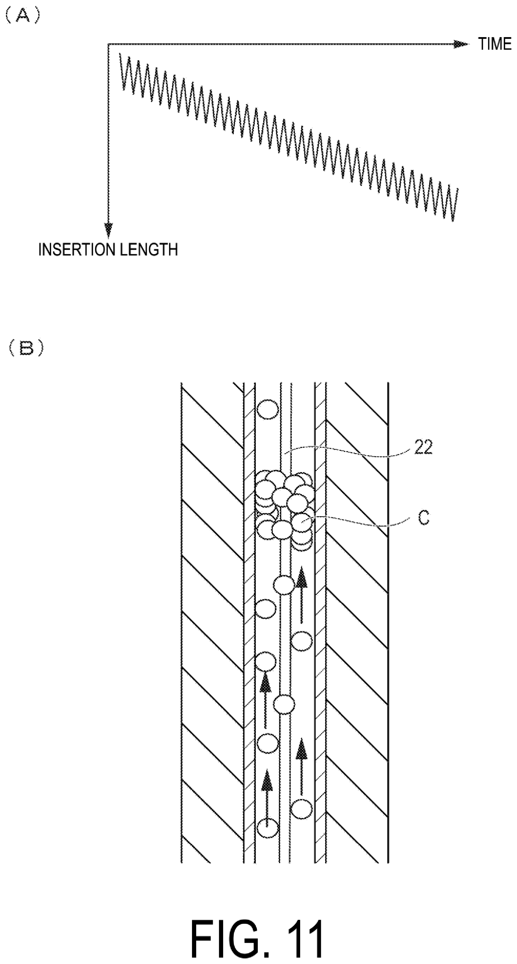

FIG. 11(A) is a graph schematically illustrating a change in the insertion length of the nozzle 21 to be inserted into the tube body 510. FIG. 11(B) is a schematic diagram illustrating a state in which clogging (bridging) of the catalyst or other solid C has occurred while the catalyst or other solid C is unloaded.

As illustrated in FIG. 11(A), the slider 32b inserts the nozzle 21 into the tube body 510 by causing the nozzle 21 to perform an inching motion that repeats the forward movement and a backward movement in which the movable chuck 35 gripping the tube 22 returns to the direction away from the tube body 510. The slider 32b constitutes an insertion mechanism configured to insert the nozzle 21 into the tube body 510 by causing the nozzle 21 to perform an inching motion that repeats the forward movement and a backward movement in which the movable chuck 35 gripping the tube 22 returns to the direction away from the tube body 510.

An inching motion is a motion in which the linear actuator 32 causes the slider 32b on the slide rail 32a to alternately repeat a forward movement in the direction toward the tube body 510 and a backward movement in the direction away from the tube body 510, thereby allowing the nozzle 21 connected to the tip end of the tube 22 to advance toward the interior of the tube body 510. By performing the inching motion, the catalyst or other solid C can intermittently receive a striking force, and the amount of gas received by the catalyst or other solid C can be intermittently changed. In this manner, as illustrated in FIG. 5, the catalyst or other solid C loosened by the gas flow "a" is pushed up toward the upper end opening portion 511 of the tube body 510 by the gas flow "b". During the backward movement, the amount of gas received by the catalyst or other solid C at the uppermost surface of a catalyst layer decreases, and accordingly, the amount of the catalyst or other solid C moving toward the opening portion 511 decreases. As a result, since the amount of the catalyst or other solid C that simultaneously moves toward the opening portion 511 does not increase excessively, the occurrence of bridging in which the catalyst or other solid C becomes clogged between the inner wall of the tube body 510 and the tube 22 can be suppressed.

In this manner, by performing the inching motion combining the forward movement and the backward movement, the catalyst or other solid C can be more efficiently unloaded than by performing only the forward motion.

In the inching motion, the insertion speed of the nozzle 21 or the inching frequency is controlled in accordance with a distance of a single forward movement of the slider 32b, a distance of a single backward movement of the slider 32b, a speed of a single forward movement thereof, a speed of a single backward movement thereof, and an acceleration. Note that, in a case where the catalyst or other solid C is not difficult-to-unload substance, and unloading the catalyst or other solid C is easy, the backward movement distance may be 0 (zero). This is also regarded as an inching motion. When the slider 32b reaches a preset distance in the forward movement or the backward movement, control of the forward movement or the backward movement is switched to another.

The relation between the distance of a single forward movement of the slider 32b in the inching motion, and the distance of a single backward movement of the slider 32b in the inching motion is expressed as Expression 3 below.

Expression 3 is as follows:
the distance of a single forward movement of the slider 32b in the inching motion ≥ the distance of a single backward movement of the slider 32b in the inching motion.

As illustrated in FIG. 11(B), while the catalyst or other solid C is unloaded, clogging (bridging) of the catalyst or other solid C may occur between the inner wall of the tube body 510 and the tube 22, depending on the shape and size of the catalyst or other solid C. When the movable chuck 35 performs the inching motion, the tube 22 vertically vibrates at high speed. This vibration can eliminate bridging. In addition, the occurrence of bridging can be suppressed. The inching motion of the movable chuck 35 further causes such an operation that the pointed tip end of the nozzle 21 continuously strikes the catalyst or other solid C. In this manner, the catalyst or other solid C pushed out by a striking force becomes movable, and thus the catalyst or other solid C can be more easily unloaded.

The movable chuck 35 is disposed to be movable between a gripping position (FIG. 10(D)) to grip the tube 22 and a grip releasing position (FIG. 10(B)) to release the tube, the grip releasing position being located in the direction toward the tube body 510 relative to the gripping position. The slider 32b constitutes a return mechanism configured to return the movable chuck 35 from the grip releasing position to the gripping position.

The insertion mechanism and the return mechanism are constituted by, for example, a drive source (not illustrated) such as a servomotor or stepping motor that moves the slider 32b, and a controller (not illustrated) that controls operation of the drive source.

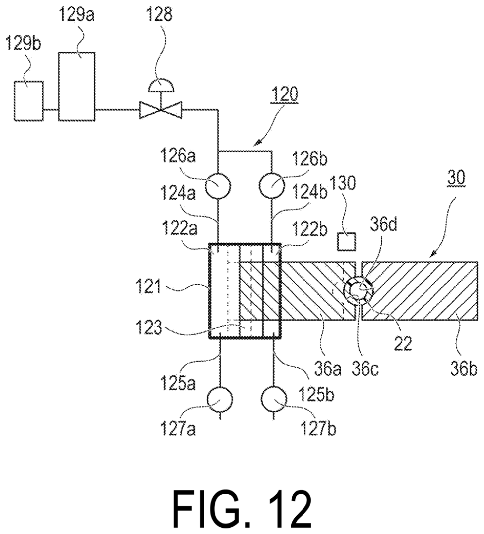

FIG. 12 is a diagram schematically illustrating a drive system of the movable chuck 35.

As schematically illustrated in FIG. 12, the movable chuck 35 includes the first block 36a, the second block 36b, and a pressing mechanism 120. The first block 36a and the second block 36b are configured to be relatively movable. The pressing mechanism 120 is configured to relatively press the first block 36a and the second block 36b. In the illustrated example, the first block 36a is configured to be movable, and the second block 36b is fixed. The pressing mechanism 120 is configured to be capable of pressing the first block 36a toward the second block 36b. The fixed chuck 33 is configured similarly. The pressing mechanism 120 includes for example, a cylinder 121, and a piston 123 that partitions the interior of the cylinder 121 into two chambers (a first chamber 122a and a second chamber 122b).

The first block 36a is coupled to the piston 123. When the pressure of fluid such as compressed air is supplied only to the first chamber 122a, the piston 123 moves toward the second block 36b. As a result, the tube 22 is gripped as the first block 36a is pressed toward the second block 36b. On the other hand, when the fluid pressure is supplied only to the second chamber 122b, the piston 123 moves in a direction away from the second block 36b. As a result, the tube 22 is released as the first block 36a moves away from the second block 36b.

Switching between the chambers to which the fluid pressure is supplied is controlled by an electromagnetic valve. Electromagnetic valves 126a, 126b, 127a, and 127b are disposed respectively in a supply line 124a for supplying the fluid pressure to the first chamber 122a, a supply line 124b for supplying the fluid pressure to the second chamber 122b, an exhaust line 125a for exhausting the interior of the first chamber 122a, and an exhaust line 125b for exhausting the interior of the second chamber 122b. The upstream side of the electromagnetic valves 126a and 126b in the supply lines 124a and 124b is connected through a decompression valve 128 to a tank 129a that stores compressed air. The tank 129a is filled with compressed air pressurized by a compressor 129b.

Gripping and releasing of the tube 22 of the gas supply pipe 20 are performed as follows. First, the electromagnetic valve 126b of the second chamber 122b is closed, the electromagnetic valve 127b is opened, and the second chamber 122b is opened to the atmosphere. In this state, the electromagnetic valve 127a of the first chamber 122a is closed, and the electromagnetic valve 126a is opened. The fluid pressure is supplied only to the first chamber 122a, and the tube 22 is gripped by the first block 36a and the second block 36b. On the other hand, the electromagnetic valve 126a of the first chamber 122a is closed, the electromagnetic valve 127a is opened, and the first chamber 122a is opened to the atmosphere. In this state, the electromagnetic valve 127b of the second chamber 122b is closed, and the electromagnetic valve 126b is opened. The fluid pressure is supplied only to the second chamber 122b, and the tube 22 gripped by the first block 36a and the second block 36b is released.

The pressure of fluid to be supplied to the first chamber 122a is adjusted by operating the decompression valve 128. Accordingly, a gripping force for gripping the tube 22 can be adjusted. In this manner, the decompression valve 128 constitutes an adjustable mechanism capable of adjusting the gripping force for gripping the tube 22.

The movable chuck 35 and the fixed chuck 33 include a sensor 130 capable of detecting the first block 36a that has moved to a normal position. The "normal position of the first block 36a" means a position at which the tube 22 is gripped without the axis of the tube 22 being shifted. Accordingly, when the sensor 130 does not detect the first block 36a in gripping the tube 22, it can be detected that the axis of the tube 22 is shifted, the first block 36a has not moved to the normal position, and an anomaly has occurred in the gripping of the tube 22. In this case, by issuing error information, an operator can recognize that the anomaly has occurred.

### Movable Guide Portion 60

As illustrated in FIGS. 3, 7, 8, and 10(A) to 10(D), the movable guide portion 60 extends from the movable chuck 35 of the gripping portion 30 toward a fixed guide portion 50. The movable guide portion 60 moves toward the fixed guide portion 50 together with a forward movement of the gripping portion 30, while holding the tube 22. The fixed guide portion 50 is included in the suction unit 104 to be described later. The configuration and operation of the movable guide portion 60 will be described later together with the configuration and operation of the fixed guide portion 50.

A material that can be used for the movable guide portion 60 only needs to be harder than the material of the tube 22, and examples of the material include metal such as SUS or aluminum, hard resin such as acrylic, and wood.

### Rotation Drive Portion 103

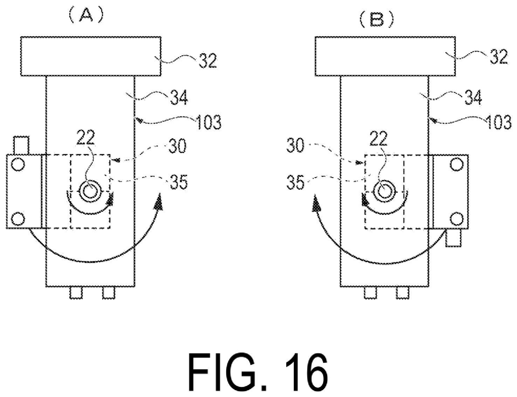

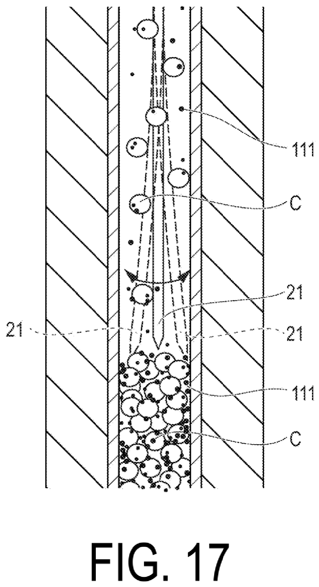

FIGS. 16(A) and 16(B) are top views for description of a rotational motion of the movable chuck 35 of the gripping portion 30. FIG. 17 is a diagram for description of forward and reverse swiveling motions of the nozzle 21. The rotation drive portion 103 includes the rotary actuator 34, the movable chuck 35 of the gripping portion 30, and the rotating portion 34a. The rotation drive portion 103 causes the nozzle 21 to perform forward and reverse swiveling motions by causing the gripping portion 30 gripping the tube 22 to perform forward and reverse rotational motions in the circumferential direction of the tube 22.

### Rotary Actuator 34 and Rotating Portion 34a

As illustrated in FIGS. 16(A) and 16(B), the rotary actuator 34 can cause the movable chuck 35 to perform forward and reverse rotational motions in the circumferential direction of the tube 22. When the movable chuck 35 gripping the tube 22 performs a rotational motion, a twist is applied to a gripped portion of the tube 22. The twist of the tube 22 is propagated to the nozzle 21. The nozzle 21 can perform forward and reverse swiveling motions by the twist of the tube 22. When the nozzle 21 performs forward and reverse swiveling motions, the nozzle 21 can evenly strike the catalyst or other solid C.

The rotary actuator 34 includes a swinging mechanism configured to cause the movable chuck 35 to perform forward and reverse rotational motions about a penetration axis of the tube 22 relative to the movable chuck 35. The movable chuck 35 is attached to the rotating portion 34a of the rotary actuator 34 so as to rotate about the penetration axis of the tube 22 (refer to FIGS. 7 and 8). The swinging mechanism uses the pressure of fluid such as compressed air as power, and changes the rotational direction by changing the direction of the fluid pressure to be supplied. By the swinging mechanism, the movable chuck 35 is rotated to a "-90° position" illustrated in FIG. 16(A) and a "+90° position" illustrated in FIG. 16(B). In this example, the range (rotation angle) of rotational motion of the movable chuck 35 is 180°.

The swinging mechanism can set the range (rotation angle) of rotational motion of the movable chuck 35 as desired. When the range (rotation angle) of rotational motion of the movable chuck 35 is increased, the amount of twist of the tube 22 increases. Thus, the magnitude of forward and reverse swiveling motions of the nozzle 21 relatively increases. Conversely, when the range (rotation angle) of rotational motion of the movable chuck 35 is reduced, the amount of twist of the tube 22 decreases. Thus, the magnitude of forward and reverse swiveling motions of the nozzle 21 relatively decreases. The magnitude of forward and reverse swiveling motions of the nozzle 21 can be adjusted by changing the range (rotation angle) of rotational motion of the movable chuck 35 by the swinging mechanism.

As illustrated in FIG. 17, the nozzle 21 performs forward and reverse swiveling motions by causing the movable chuck 35 gripping the tube 22 to perform forward and reverse rotational motions in the circumferential direction of the tube 22. Thus, the position to which a striking force is applied changes irregularly, and the nozzle 21 can evenly strike the catalyst or other solid C. Accordingly, even when a relatively large striking force is applied to the catalyst or other solid C, application of the striking force only to limited positions is prevented, and the struck catalyst or other solid C is loosened. In addition, the catalyst or other solid C loosened by the striking moves, and a gap is generated. Accordingly, loosening of the catalyst or other solid C by the next striking becomes easier. As a result, the catalyst or other solid C can be unloaded from the interior of the tube body 510.

### Suction Unit 104

As illustrated in FIGS. 1, 2, and 3, the suction unit 104 includes an L-shaped pipe 91 having a substantially L shape, the fixed guide portion 50, a suction pipe 93, hoses 94 and 95, a collection container 430, and a suction machine 420. The suction unit 104 suctions the catalyst or other solid C together with a flow of gas discharged from the nozzle 21.

### L-shaped Pipe 91 and Suction Pipe 93

An end portion of the L-shaped pipe 91 on the lower end side in FIG. 3 is connected to the upper end opening portion 511 of the tube body 510. As illustrated in FIG. 1, the other end portion of the L-shaped pipe 91 is connected to the suction pipe 93.

The L-shaped pipe 91 is formed to have a through-hole 92 through which the fixed guide portion 50 is inserted. In a state in which the L-shaped pipe 91 is connected to the upper end opening portion 511 of the tube body 510, the through-hole 92 may or may not be located on an extension of the central axis of the tube body 510. The catalyst or other solid C can be efficiently unloaded by striking the vicinity of the inner wall surface of the tube body 510 through forward and reverse swiveling motions, rather than by striking on the central axis of the tube body 510.

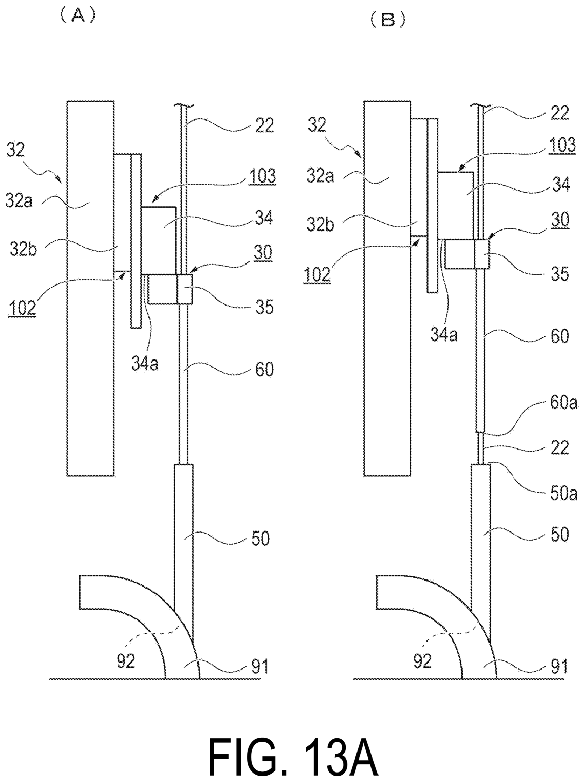

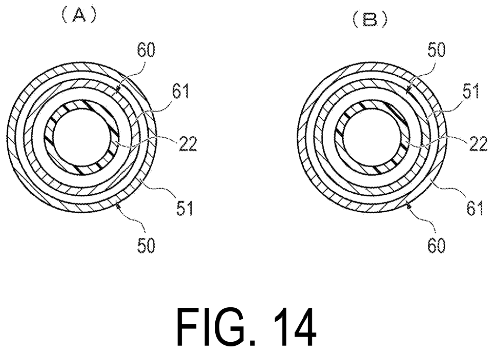

As illustrated in FIGS. 13A(A) and 13A(B), the fixed guide portion 50 is directly connected to the through-hole 92, is located closer to the tube body 510 than the gripping portion 30, and covers the tube 22. As illustrated in FIGS. 14(A) and 14(B), the fixed guide portion 50 can be constituted by a hollow cylindrical body 51 connected to the through-hole 92 of the L-shaped pipe 91.

### Suction Machine 420 and Collection Container 430

As illustrated in FIG. 2, the suction pipe 93 is connected to the collection container 430 through the hose 94. The collection container 430 is connected to the suction machine 420 through the hose 95. The suction machine 420 can be constituted by, for example, a well-known dust collector that sucks gas and generates negative pressure. The collection container 430 can be constituted by, for example, a metal container (such as a drum). When the suction machine 420 is operated, the catalyst or other solid C is suctioned together with the flow of gas discharged from the nozzle 21. The catalyst or other solid C is transferred to the collection container 430 through the suction pipe 93 and the hose 94.

### Fixed Guide Portion 50 and Movable Guide Portion 60

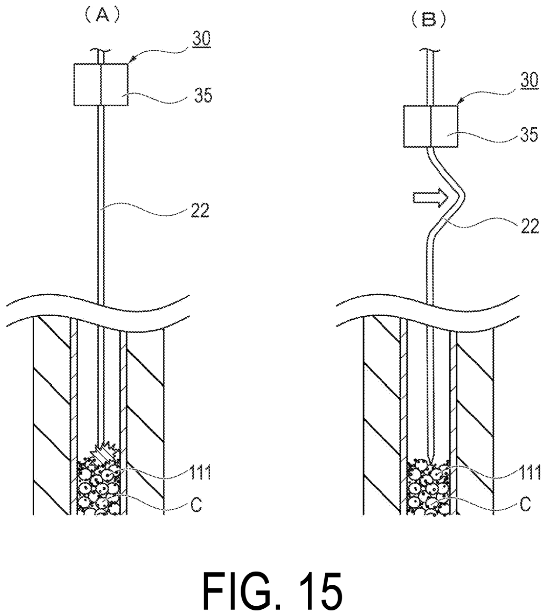

FIGS. 13A(A) and 13A(B) are diagrams illustrating relevant parts of the inching drive portion 102 and the suction unit 104. FIGS. 14(A) and 14(B) are cross-sectional views illustrating the fixed guide portion 50 and the movable guide portion 60. FIGS. 15(A) and 15(B) are diagrams for description of a defect where the tube 22 bends. The configuration and operation of the fixed guide portion 50 will be described below in detail together with the configuration and operation of the movable guide portion 60.

As illustrated in FIGS. 13A(A) and 13A(B), the fixed guide portion 50 is located closer to the tube body 510 than the gripping portion 30 and covers the tube 22. The movable guide portion 60 extends from the movable chuck 35 of the gripping portion 30 toward the fixed guide portion 50, and moves toward the fixed guide portion 50 together with a forward movement of the gripping portion 30, while holding the tube 22.

As illustrated in FIGS. 14(A) and 14(B), the fixed guide portion 50 can be constituted by the hollow cylindrical body 51 connected to the through-hole 92 of the L-shaped pipe 91. Similarly, the movable guide portion 60 can be constituted by a hollow cylindrical body 61. The movable guide portion 60 is attached to the movable chuck 35 constituting the gripping portion 30 and extends toward the fixed guide portion 50. Each of the hollow cylindrical bodies 51 and 61 constituting the fixed guide portion 50 and the movable guide portion 60, respectively, has an uninterrupted ring shape in a cross section orthogonal to the axis, but is not limited to this shape. An appropriate shape may be selected for the fixed guide portion 50 as long as the fixed guide portion 50 can cover the tube 22. An appropriate shape can be selected for the movable guide portion 60 as long as the movable guide portion 60 can hold the tube 22 while moving toward the fixed guide portion 50. For example, each of the hollow cylindrical bodies 51 and 61 may have a substantially C-shape in a cross section orthogonal to the axis, and have a discontinued portion. However, the discontinued portion has a size for preventing the tube 22 from slipping off.

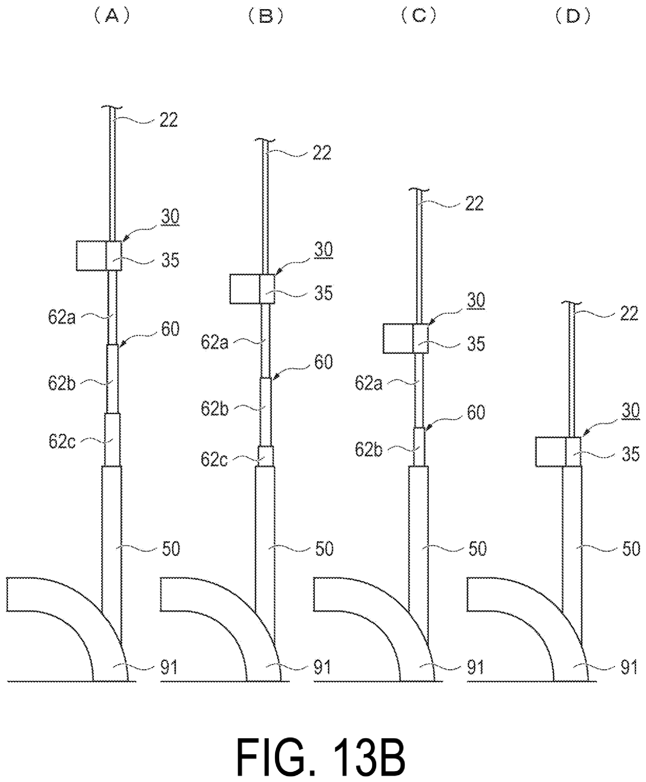

The movable guide portion 60 is not limited to being constituted by one hollow cylindrical body 61. For example, the movable guide portion 60 can be constituted by a plurality of hollow cylindrical bodies 61 that are connectable in the axial direction by a screw-in type structure. As illustrated in FIG. 13B(A) to (D), the movable guide portion 60 can be constituted by a plurality (three in the illustrated example) of hollow cylindrical bodies 62a, 62b, and 62c that are connectable in the axial direction by a telescopic structure. The hollow cylindrical bodies 62a, 62b, and 62c are different from each other in outer diameter and inner diameter. When the gripping portion 30 moves forward, the hollow cylindrical body 62a is housed in the hollow cylindrical body 62b, the hollow cylindrical body 62b is housed in the hollow cylindrical body 62c, and the hollow cylindrical body 62c is housed in the hollow cylindrical body 51 constituting the fixed guide portion 50 (operation from FIG. 13B(A) to FIG. 13B(D)). On the other hand, when the gripping portion 30 moves backward, the hollow cylindrical body 62a is withdrawn from the interior of the hollow cylindrical body 62b, the hollow cylindrical body 62b is withdrawn from the interior of the hollow cylindrical body 62c, and the hollow cylindrical body 62c is withdrawn from the interior of the hollow cylindrical body 51 constituting the fixed guide portion 50 (operation from FIG. 13B(D) to FIG. 13B(A)). During the inching motion, the overall length of the movable guide portion 60 changes as the hollow cylindrical bodies 62a, 62b, and 62c are housed and withdrawn. In the screw-in type structure or telescopic structure, the axial length of the movable guide portion 60 can be adjusted, and downsizing of the inching drive portion 102 can be achieved. The movable guide portion 60 may be configured to be extendable and retractable so that the axial length of the movable guide portion 60 can be adjusted.

As illustrated in FIG. 14(A), the inner diameter of the fixed guide portion 50 may be larger than the outer diameter of the movable guide portion 60. In this case, when the gripping portion 30 moves forward, the movable guide portion 60 is inserted into the fixed guide portion 50. Alternatively, as illustrated in FIG. 14(B), the outer diameter of the fixed guide portion 50 may be smaller than the inner diameter of the movable guide portion 60. In this case, when the gripping portion 30 moves forward, the movable guide portion 60 is inserted over the outside of the fixed guide portion 50.

A material that can be used for the fixed guide portion 50 only needs to be harder than the tube 22, and examples of the material include metal such as SUS or aluminum, hard resin such as acrylic, and wood.

Through long-term use, each catalyst or other solid C may adhere to another, may change to a non-uniform shape, or may adhere to an inner wall surface. Reference sign 111 in FIGS. 15(A) and 15(B) schematically represent impurities such as carbides similarly to FIG. 5. When an operation of unloading the catalyst or other solid C is performed, the tube 22 is pushed into the interior of the tube body 510 to cause the tip end of the nozzle 21 to collide with the adhered catalyst or other solid C and apply an impact force, so that the adhered catalyst or other solid C can be loosened. Accordingly, the catalyst or other solid C can be smoothly unloaded.

As illustrated in FIG. 15(A), when the catalyst or other solid C including difficult-to-unload substance is unloaded, a relatively large striking force needs to be applied from the nozzle 21 to the upper surface of the difficult-to-unload substance, and a high load tends to be applied to the tube 22. The tube 22 is unsupported and exposed in a portion extending from the gripping portion 30 to a position just before the tube 22 is inserted into the L-shaped pipe 91. Thus, as illustrated in FIG. 15(B), the exposed portion of the tube 22 tends to bend. When the tube 22 bends, a striking force cannot be applied to the difficult-to-unload substance. In order to prevent bending of the tube 22, it is thought to set a small gripping force for the gripping portion 30 to grip the tube 22 so that the tube 22 easily slips to the gripping portion 30. However, in this case, a large striking force cannot be applied.

As illustrated in FIG. 13A(A), the movable guide portion 60 can eliminate the exposed portion of the tube 22 in a portion between the gripping portion 30 and the fixed guide portion 50. Thus, in a case where the catalyst or other solid C including difficult-to-unload substance is unloaded, bending of the tube 22 can be prevented even when a high load is applied to the tube 22. Specifically, the catalyst or other solid C can be unloaded even when a high load of 2 times or more and 20 times or less a compression force that causes the tube 22 to buckle in the above-described selection test of the piping member is applied. Accordingly, smooth vertical movement of the tube 22 can be ensured even when a relatively large striking force is applied to the difficult-to-unload substance. As a result, the catalyst or other solid C including the difficult-to-unload substance can be unloaded from the interior of the tube body 510.

When agglomerated catalyst or other solid C is present during the unloading process, the catalyst or other solid C may not be unloadable only by the inching motion. In such a case, the catalyst or other solid C may be unloadable by combining the inching motion and the forward and reverse swiveling motions. The agglomerated catalyst or other solid may start moving when a striking point on the agglomerated catalyst or other solid by the inching motion is changed, by the forward and reverse swiveling motions, to a striking point on catalyst or other solid that is not agglomerated. At this time, the agglomerated catalyst or other solid starts moving as a mass, and in that process, may cause bridging due to the mass. When the inching motion is performed in a state where bridging has occurred, a high load is applied to the tube 22. In such a case as well, bending of the tube 22 can be prevented since the movable guide portion 60 reduces the exposed portion of the tube 22 in the portion between the gripping portion 30 and the fixed guide portion 50.

The tube 22 has flexibility and also has rigidity necessary for transmitting a striking force. Thus, bending of the tube 22 can be suppressed even when the tube 22 has an exposed portion to some extent. An allowable largest length of the tube 22 to be exposed is not uniquely determined, depending on the material of the tube 22 and the magnitude of the striking force, but is empirically 5 cm approximately.

Thus, as illustrated in FIG. 13A(B), the forward movement of the movable guide portion 60 can be started in a state in which a nozzle-advancing-direction end portion 60a (the lower end portion in the diagram) of the movable guide portion 60 is located in the direction toward the tube body 510 (on the lower side in the diagram) than a position 5 cm upstream (on the upper side in the diagram) of a nozzle-retracting-direction end portion 50a (the upper end portion in the diagram) of the fixed guide portion 50.

A movement range of the movable guide portion 60 is controlled by controlling the movable range of the slider 32b. The upper limit position of the movable range of the slider 32b is set on the upper side in the diagram. The nozzle-advancing-direction end portion 60a of the movable guide portion 60 can be located upstream (on the upper side in the diagram) of the nozzle-retracting-direction end portion 50a of the fixed guide portion 50.

In this manner, the unloading device 10 includes a movable guide control mechanism configured to control the movement range of the movable guide portion 60. The movable guide control mechanism is, for example, a mechanism configured to control the movable range of the slider 32b. The movable range of the slider 32b is controlled by controlling a stepping motor configured to drive the slider 32b. The movable guide control mechanism controls a forward movement range of the movable guide portion 60 between a position at which the nozzle-advancing-direction end portion 60a of the movable guide portion 60 is 5 cm or less in a nozzle retracting direction from the nozzle-retracting-direction end portion 50a of the fixed guide portion 50, and a position at which the nozzle-advancing- direction end portion 60a of the movable guide portion 60 is 70 cm or less in the nozzle advancing direction from the nozzle-retracting-direction end portion 50a of the fixed guide portion 50. When the nozzle-advancing-direction end portion 60a of the movable guide portion 60 is 70 cm or less in the nozzle advancing direction from the nozzle-retracting-direction end portion 50a of the fixed guide portion 50, collision of the gripping portion 30 with the fixed guide portion 50 can be avoided when the nozzle 21 advances.

In the embodiment, in order to eliminate the exposed portion of the tube 22, the fixed guide portion 50 is constituted by the hollow cylindrical body 51 connected to the through-hole 92 of the L-shaped pipe 91 (see FIG. 3). The configuration of the fixed guide portion 50 is not limited to this case. When the L-shaped pipe 91 is fixed to the tube body 510, the L-shaped pipe 91 itself can function as the fixed guide portion 50. In this configuration, the movable guide portion 60 is directly inserted into the interior of the L-shaped pipe 91 from the through-hole 92.

### Operation and Effect

As described above, the unloading device 10 of the present embodiment includes the gas supply pipe 20, the gripping portion 30, and the inching drive portion 102, and further includes the fixed guide portion 50 located closer to the tube body 510 than the gripping portion 30 and covering the tube 22, and the movable guide portion 60 extending from the gripping portion 30 toward the fixed guide portion 50 and configured to move toward the fixed guide portion 50 together with the forward movement of the gripping portion 30 while holding the tube 22.

With this configuration, in a case where the catalyst or other solid C including difficult-to-unload substance is unloaded, bending of the tube 22 can be prevented even when a high load is applied to the tube 22. Accordingly, smooth vertical movement of the tube 22 can be ensured even when a relatively large striking force is applied to the difficult-to-unload substance. As a result, the catalyst or other solid C including the difficult-to-unload substance can be unloaded from the interior of the tube body 510.

The fixed guide portion 50 and the movable guide portion 60 are both constituted by the hollow cylindrical bodies 51 and 61, respectively, and the inner diameter of the fixed guide portion 50 is larger than the outer diameter of the movable guide portion 60, or the outer diameter of the fixed guide portion 50 is smaller than the inner diameter of the movable guide portion 60. With this configuration, when the gripping portion 30 moves forward, the movable guide portion 60 is inserted into the interior of the fixed guide portion 50 or is inserted over the outside of the fixed guide portion 50. Accordingly, bending of the tube 22 can be prevented even when a high load is applied to the tube 22.

The unloading device 10 includes the movable guide control mechanism configured to control the movement range of the movable guide portion 60. The movable guide control mechanism controls the forward movement range of the movable guide portion 60 between a position at which the nozzle-advancing-direction end portion 60a of the movable guide portion 60 is 5 cm or less in the nozzle retracting direction from the nozzle-retracting-direction end portion 50a of the fixed guide portion 50, and a position at which the nozzle-advancing-direction end portion 60a of the movable guide portion 60 is 70 cm or less in the nozzle advancing direction from the nozzle-retracting-direction end portion 50a of the fixed guide portion 50. With this configuration, bending of the tube 22 can be prevented even when a portion of the tube 22 is exposed.

The unloading device 10 of the present embodiment includes the gas supply pipe 20, the gripping portion 30, and the inching drive portion 102, and further includes the rotation drive portion 103 configured to cause the nozzle 21 to perform forward and reverse swiveling motions by causing the gripping portion 30 gripping the tube 22 to perform forward and reverse rotational motions in the circumferential direction of the tube 22. The inching drive portion 102 includes an insertion mechanism configured to insert the nozzle 21 into the tube body 510 by causing the nozzle 21 to perform an inching motion that repeats the forward movement and a backward movement in which the gripping portion 30 gripping the tube 22 returns to a direction away from the tube body 510.

With this configuration, since the nozzle 21 performs the forward and reverse swiveling motions, the nozzle 21 can evenly strike the catalyst or other solid C. Accordingly, even when a relatively large striking force is applied to the difficult-to-unload substance, application of the striking force only to limited positions is prevented, and the catalyst or other solid C including the difficult-to-unload substance can be efficiently unloaded.

The inching motion of the nozzle 21 causes the nozzle 21 to strike forward, and a striking point is changed by the forward and reverse swiveling motions of the nozzle 21. The combination of the inching motion and the forward and reverse swiveling motions may cause bending of the tube 22. However, since the unloading device 10 includes the movable guide portion 60 and the fixed guide portion 50, bending of the tube 22 can be prevented even when a combination of the inching motion and the forward and reverse swiveling motions is imparted to the nozzle 21.

The rotation drive portion 103 includes a swinging mechanism configured to cause the gripping portion 30 to perform forward and reverse rotational motions about the penetration axis of the tube 22 relative to the gripping portion 30. This configuration can cause the nozzle 21 to easily perform the forward and reverse swiveling motions.

It is preferable to unload the catalyst or other solid C by combining the inching motion by the inching drive portion 102 and the swiveling motions by the rotation drive portion 103. In the combination, the inching motion and the swiveling motion may be simultaneously performed, the inching motion and the swiveling motion may be alternately performed at a fixed timing or an optional timing, or after only the inching motion is performed, the swiveling motion may be performed.

The gripping portion 30 is disposed to be movable between a gripping position to grip the tube 22 and a grip releasing position to release the tube 22, the grip releasing position being located in the direction toward the tube body 510 relative to the gripping position. The inching drive portion 102 includes a return mechanism configured to return the gripping portion 30 from the grip releasing position to the gripping position. With this configuration, the nozzle 21 can be easily inserted into the tube body 510 by causing the gripping portion 30 to repeat gripping and releasing of the tube 22.

The gripping portion 30 includes an adjustable mechanism capable of adjusting the gripping force for gripping the tube 22. With this configuration, slipping of the tube 22 to the gripping portion 30 can be prevented in accordance with a necessary striking force applied to the catalyst or other solid C.

The withdrawal portion configured to withdraw the gas supply pipe 20 from the tube body 510 is further included. With this configuration, the gas supply pipe 20 can be easily withdrawn after unloading of the catalyst or other solid C is completed.

The suction unit 104 configured to suction the catalyst or other solid C together with a flow of gas discharged from the nozzle 21 is further included. With this configuration, the catalyst or other solid C can be easily unloaded from the interior of the tube body 510.

An unloading method of the present embodiment includes supplying gas through the gas supply pipe 20 including the nozzle 21 and the tube 22, and moving the tube 22 forward toward the tube body 510 by an inching motion while protecting the tube 22 with the fixed guide portion 50 and the movable guide portion 60. The catalyst or other solid C is loosened by causing the nozzle 21 to strike the catalyst or other solid C. Then, the catalyst or other solid C is unloaded by suctioning the catalyst or other solid C together with a flow of the gas while discharging the gas from the nozzle 21.

With such an unloading method, in a case where the catalyst or other solid C including the difficult-to-unload substance is unloaded, bending of the tube 22 can be prevented even when a high load is applied to the tube 22. Accordingly, smooth vertical movement of the tube 22 can be ensured even when a relatively large striking force is applied to the difficult-to-unload substance. As a result, the catalyst or other solid C including the difficult-to-unload substance can be unloaded from the interior of the tube body 510.

The unloading method includes unloading the catalyst or other solid C by combining an inching motion of the nozzle 21 and a swiveling motion of the nozzle 21. By combining the inching motion and the swiveling motion, the nozzle 21 can evenly strike the catalyst or other solid C. Accordingly, even when a relatively large striking force is applied to the difficult-to-unload substance, application of the striking force only to limited positions is prevented, and the catalyst or other solid C including the difficult-to-unload substance can be efficiently unloaded.

The unloading method further includes a step of withdrawing the gas supply pipe 20 from the tube body 510 after unloading the catalyst or other solid C. With this step, the gas supply pipe 20 can be easily withdrawn after unloading of the catalyst or other solid C is completed.

### Modifications

The embodiment of the present invention has been described above, but the present invention is not limited to the configurations described in the above embodiment and may be modified as appropriate based on description of the claims.

The unloading device 10 of the embodiment includes the fixed guide portion 50 and the movable guide portion 60, which make it possible to prevent bending of the tube 22, and the rotation drive portion 103, which makes it possible for the nozzle 21 to evenly strike the catalyst or other solid C. Unloading the catalyst or other solid C including the difficult-to-unload substance from the interior of the tube body 510 even when a relatively large striking force is applied to the difficult-to-unload substance can also be made possible by the unloading device 10 that does not include the latter rotation drive portion 103 (the invention according to claim 1), or the unloading device 10 that does not include the former fixed guide portion 50 or movable guide portion 60 (the invention according to claim 5).

The following embodiments are also included in the scope of the present invention: the unloading device 10 according to any one of Claims 2, 3, and 6 and having the features of Claim 7; the unloading device 10 according to any one of Claims 2, 3, 6, and 7 and having the features of Claim 8; the unloading device 10 according to any one of Claims 2, 3, 6, 7, and 8 and having the features of Claim 9; and the unloading device 10 according to any one of Claims 2, 3, 6, 7, 8, and 9 and having the features of Claim 10.

The present application is based on Japanese Patent Application No. 2024-055559 filed on March 29, 2024, the disclosure of which is incorporated herein by reference in its entirety.

### Reference Signs List

10 Unloading device
20 Gas supply pipe
21 Nozzle
22 Tube
23 Pipe
30 Gripping portion
32 Linear actuator
32a Slide rail
32b Slider
33 Fixed chuck
34 Rotary actuator
34a Rotating portion
35 Movable chuck
50 Fixed guide portion
50a Nozzle-retracting-direction end portion
51 Hollow cylindrical body
60 Movable guide portion
60a Nozzle-advancing-direction end portion
61 Hollow cylindrical body
62a Hollow cylindrical body
62b Hollow cylindrical body
62c Hollow cylindrical body
80 Tube housing portion
81 Reel
91 L-shaped pipe
93 Suction pipe
101 Gas supply unit
102 Inching drive portion
103 Rotation drive portion
104 Suction unit
120 Pressing mechanism
500 Reactor
510 Tube body

## Claims

1. An unloading device configured to unload catalyst or other solid by supplying gas into a tube body loaded with the catalyst or other solid, the unloading device comprising:
a gas supply pipe including a nozzle capable of discharging gas inside the tube body, and a tube that supplies the gas to the nozzle, the tube having flexibility;
a gripping portion capable of gripping and releasing the tube;
an inching drive portion configured to insert the nozzle into the tube body by moving the gripping portion gripping the tube forward in a direction toward the tube body;
a fixed guide portion located closer to the tube body than the gripping portion and covering the tube; and
a movable guide portion extending from the gripping portion toward the fixed guide portion, and configured to move toward the fixed guide portion together with the forward movement of the gripping portion, while holding the tube.

2. The unloading device according to claim 1, wherein
the fixed guide portion and the movable guide portion are both constituted by hollow cylindrical bodies, and
an inner diameter of the fixed guide portion is larger than an outer diameter of the movable guide portion, or an outer diameter of the fixed guide portion is smaller than an inner diameter of the movable guide portion.

3. The unloading device according to claim 1 or 2, further comprising a movable guide control mechanism configured to control a movement range of the movable guide portion,
wherein the movable guide control mechanism controls a forward movement range of the movable guide portion between a position at which a nozzle-advancing-direction end portion of the movable guide portion is 5 cm or less in a nozzle retracting direction from a nozzle-retracting-direction end portion of the fixed guide portion, and a position at which the nozzle-advancing-direction end portion of the movable guide portion is 70 cm or less in a nozzle advancing direction from the nozzle-retracting-direction end portion of the fixed guide portion.

4. The unloading device according to claim 1 or 2, the unloading device being configured to unload catalyst or other solid by supplying gas into a tube body loaded with the catalyst or other solid, the unloading device comprising:
a gas supply pipe including a nozzle capable of discharging gas inside the tube body, and a tube that supplies the gas to the nozzle, the tube having flexibility;
a gripping portion capable of gripping and releasing the tube;
an inching drive portion configured to insert the nozzle into the tube body by moving the gripping portion gripping the tube forward in a direction toward the tube body; and
a rotation drive portion configured to cause the nozzle to perform forward and reverse swiveling motions by causing the gripping portion gripping the tube to perform forward and reverse rotational motions in a circumferential direction of the tube,
wherein the inching drive portion includes an insertion mechanism configured to insert the nozzle into the tube body by causing the nozzle to perform an inching motion that repeats the forward movement and a backward movement in which the gripping portion gripping the tube returns to a direction away from the tube body.

5. An unloading device configured to unload catalyst or other solid by supplying gas into a tube body loaded with the catalyst or other solid, the unloading device comprising:
a gas supply pipe including a nozzle capable of discharging gas inside the tube body, and a tube that supplies the gas to the nozzle, the tube having flexibility;
a gripping portion capable of gripping and releasing the tube;
an inching drive portion configured to insert the nozzle into the tube body by moving the gripping portion gripping the tube forward in a direction toward the tube body; and
a rotation drive portion configured to cause the nozzle to perform forward and reverse swiveling motions by causing the gripping portion gripping the tube to perform forward and reverse rotational motions in a circumferential direction of the tube,
wherein the inching drive portion includes an insertion mechanism configured to insert the nozzle into the tube body by causing the nozzle to perform an inching motion that repeats the forward movement and a backward movement in which the gripping portion returns to a direction away from the tube body.

6. The unloading device according to claim 5, wherein the rotation drive portion includes a swinging mechanism configured to perform forward and reverse rotational motions of the gripping portion about a penetration axis of the tube relative to the gripping portion.

7. The unloading device according to claim 1 or 5, wherein
the gripping portion is disposed to be movable between a gripping position to grip the tube and a grip releasing position to release the tube, the grip releasing position being located in a direction toward the tube body relative to the gripping position, and
the inching drive portion includes a return mechanism configured to return the gripping portion from the grip releasing position to the gripping position.

8. The unloading device according to claim 1 or 5, wherein the gripping portion includes an adjustable mechanism capable of adjusting a gripping force for gripping the tube.

9. The unloading device according to claim 1 or 5, further comprising a withdrawal portion configured to withdraw the gas supply pipe from the tube body.

10. The unloading device according to claim 1 or 5, further comprising a suction unit configured to suction the catalyst or other solid together with a flow of the gas discharged from the nozzle.

11. An unloading method for unloading catalyst or other solid by supplying gas into a tube body loaded with the catalyst or other solid, the unloading method comprising:
supplying gas through a gas supply pipe including a nozzle and a tube;
moving the tube forward toward the tube body by an inching motion, while protecting the tube with a fixed guide portion and a movable guide portion;
loosening the catalyst or other solid by causing the nozzle to strike the catalyst or other solid; and
unloading the catalyst or other solid by suctioning the catalyst or other solid together with a flow of the gas, while discharging the gas from the nozzle.

12. The unloading method according to claim 11, wherein catalyst or other solid is unloaded by combining an inching motion of the nozzle and a swiveling motion of the nozzle.

13. The unloading method according to claim 11 or 12, further comprising withdrawing the gas supply pipe after unloading the catalyst or other solid.
